# EUROPÄISCHE PATENTANMELDUNG

(11) **EP 0 570 623 A2**
(43) Veröffentlichungstag der Anmeldung: **24.11.1993**
(21) Anmeldenummer: 92119248.0
(22) Anmeldetag: 11.11.1992
(51) Int. Cl.: F02D 11/10

(54) **Vorrichtung zum Verstellen einer Drosselklappe**

(30) Priorität: 21.05.1992 DE 4216788
(71) Anmelder: VDO Adolf Schindling AG, D-60487 Frankfurt (DE)
(72) Erfinder: Göhring, Frank, W-6000 Frankfurt (Main) (DE)
(74) Vertreter: Müller, Kurt, Dipl.-Ing.

(57) **Zusammenfassung**

Für eine Vorrichtung zum Verstellen einer im Ansaugstutzen einer Brennkraftmaschine drehbar gelagerten Drosselklappe (1), die einen elektromotorischen Stellantrieb (7) für die Leerlaufregelung sowie zur Einhaltung einer einstellbaren Fahrzeuggeschwindigkeit und eine elektronische Regeleinrichtung (9) umfaßt, wird vorgeschlagen, den Hebel (15) über den der Stellantriebe (7) die Drosselklappenwelle (11) in Öffnungsrichtung mitnehmen kann, zweiteilig mit einer zwischengeschalteten Kupplung (23) auszubilden, so daß von einem notwendigen Abschalten des Stellantriebs im Falle festgestellter Fehlfunktionen nur der Teil oberhalb des Leerlaufbereichs, nicht aber der Leerlaufbereich selbst betroffen ist.

## Beschreibung

Die Erfindung bezieht sich auf eine Vorrichtung zum Verstellen einer im Ansaugstutzen einer Brennkraftmaschine drehbar gelagerten Drosselklappe, bestehend im wesentlichen aus
- einem gegen die Kraft einer ersten Rückstellfeder zwischen einem Leerlaufanschlag und einem Vollastanschlag mittels Gaspedal und Gestänge oder Seilzug verstellbaren und mit der Welle der Drosselklappe koppelbaren Stellorgan,
- einem elektromotorischen Stellantrieb mit Getriebe,
- einer elektronischen Regeleinrichtung sowie
- einer gegen die Kraft einer zweiten Rückstellfeder drehbaren Drosselklappenwelle mit einem ersten Ende für die Ankopplung an das Stellorgan und einem zweiten Ende für die Ankopplung an den Stellantrieb.

Derartige Vorrichtungen werden zur Leerlaufregelung von Brennkraftmaschinen in Kraftfahrzeugen und zur Einhaltung einer einstellbaren Geschwindigkeit benutzt, wobei die Verstellung der Drosselklappe bei völlig entlastetem Gaspedal allein vom elektromotorischen Stellantrieb im Zusammenspiel mit der zugehörigen Rückstellfeder vorgenommen wird. Im Unterschied zu elektromotorischen Stellantrieben, die die Drosselklappe oberhalb des Leerlaufbereichs nur in Schließrichtung verstellen können, beispielsweise in Verbindung mit einem automatischen Getriebe oder mit einer Antriebsregelung (vgl. DE-OS 38 15 734), muß der Stellantrieb bei einer automatischen Geschwindigkeitsregelung die Drosselklappe oberhalb des Leerlaufbereichs gegen eine Rückstellfeder auch in Öffnungsrichtung verstellen können. Die Drosselklappe kann von dem elektromotorischen Stellantrieb bei entsprechender Ansteuerung durch die elektronische Regeleinrichtung also bis in die Vollaststellung verstellt werden. Sieht man davon ab, daß der Fahrer jederzeit die Möglichkeit hat, die automatische Geschwindigkeitsregelung abzustellen und daß die automatische Geschwindigkeitsregelung bei einer Betätigung des Brems- oder Kupplungspedals automatisch abgestellt wird, (vgl. DE-OS 28 56 294), so kann eine Fehlfunktion der elektronischen Regeleinrichtung doch zu einem sicherheitstechnischen Risiko führen, wenn der Fahrer entweder eine unerwünscht hohe Geschwindigkeit nicht gleich bemerkt, oder durch eine unerwartete Geschwindigkeitssteigerung überrascht wird. Zur Vermeidung derartiger Fehlfunktionen besitzt die elektronische Regeleinrichtung eine Reihe von Prüfroutinen, durch die die Steuerbefehle für den elektromotorischen Stellantrieb auf Plausibilität überwacht werden und die ein Abtrennen des elektromotorischen Stellantriebs von der Drosselklappenwelle mittels elektromagnetischer Kupplung bewirken, wenn irgendwelche Unregelmäßigkeiten festgestellt werden.

Von einer derart verursachten Abkupplung des Stellantriebs von der Drosselklappenwelle ist dann zwangsläufig auch die Leerlaufregelung betroffen, d.h. die Drosselklappe nimmt bei Entlastung des Gaspedals eine vorgegebene feste Notlaufstellung ein, die nicht mehr zu beeinflussen ist und die aus Gründen der Wirtschaftlichkeit und Sicherheit nicht dem maximalen Leerlauf-Leistungsbedarf entsprechen kann. Die Sicherheitsabschaltung des elektromotorischen Stellantriebs führt bei der bekannten Stellvorrichtung also dazu, daß man auf die Vorteile einer elektromotorischen Leerlaufregelung verzichten muß. Die Leistung der Brennkraftmaschine kann also nicht mehr auf einen unterhalb der Notlaufstellung liegenden Leistungsbedarf eingestellt werden und einen oberhalb der Notlaufstellung liegenden Leistungsbedarf nicht mehr abdecken. Der Fahrer wird zwar bemerken, daß die automatische Geschwindigkeitsregelung nicht mehr benutzt werden kann, er wird in der Mehrzahl der Fälle aber nicht wissen, oder nicht daran denken, daß mit dem Zuschalten von Verbrauchern wie Radio, Fernlicht, Heckscheibenheizung, Klimaanlage usw. die Brennkraftmaschine überlastet und zum Stillstand gebracht werden kann. Außerdem können Abgasprobleme auftreten.

Mittels moderner Sensoren und elektronischer Schaltungen lassen sich praktisch alle Funktionen eines Kraftfahrzeugs überwachen und entsprechende Signale zum Auslösen von Schaltvorgängen unter sicherheitstechnischen Gesichtspunkten heranziehen. Bei einer Vorrichtung zum Verstellen einer Drosselklappe kann beispielsweise festgestellt werden, ob das Getriebe zwischen elektromotorischem Antrieb und Drosselklappenwelle oder ob die Drosselklappe selbst einen zu großen Drehwiderstand hat oder gar klemmt. Es können die Fehlanzeigen bzw. der Ausfall von Potentiometern sowie Fehler im Positionsregler oder in der Endstufe der elektronischen Regeleinrichtung festgestellt werden. Alle diese Fehler führen entweder zum Stillstand der Brennkraftmaschine oder erfordern ein direktes Anlaufen einer Werkstatt. Eine Aufrechterhaltung der Leerlauf-Regelfunktion ist in diesen Fällen nicht erforderlich.

Es gibt aber auch eine ganze Reihe von Fehlern, bei denen das Fahrzeug abgesehen von der automatischen Einhaltung der vorgegebenen Geschwindigkeit voll funktionsfähig ist und ohne Reparatur noch beliebig lange benutzt werden kann. Dazu zählen Defekte im Elektronikmodul für die automatische Einstellung der Geschwindigkeit, bei der Erstellung des Geschwindigkeitssignals sowie am Bedienhebel für die Einstellung der Soll-Geschwindigkeit. Außerdem können die Ergebnisse der Plausibilitätsüberprüfungen dahingehend unterschieden werden, ob der elektromotorische Stellantrieb gänzlich abgeschaltet werden muß, oder ob seine Funktion für den Leerlaufbereich noch genutzt werden kann.

Aus alledem ergibt sich die Aufgabe die gattungsmäßige Vorrichtung so weiterzubilden, daß sich die Sicherheitsabschaltung des Stellantriebs nicht auf den Leerlauf-Regelbereich auswirkt.

Diese Aufgabe wird erfindungsgemäß dadurch gelöst, daß der elektromotorische Stellantrieb über das Getriebe mit einem ersten Hebel und einem zweiten Hebel koppelbar ist, wobei
- der erste Hebel im Leerlaufbereich zwischen Anschlägen für LLₘᵢₙ und LLₘₐₓ in Schließrichtung der Drosselklappe vom Stellantrieb mitnehmbar ist,
- der zweite Hebel im Arbeitsbereich zwischen Anschlägen für LLₙₒₜ und VL in Öffnungsrichtung der Drosselklappe vom Stellantrieb mitnehmbar ist,
- zwischen beiden Hebeln eine Kopplungsfeder angeordnet ist, durch die die beiden Hebel gegeneinander vorgespannt sind und wobei,
- der zweite Hebel aus zwei Teilen besteht, die mittels einer Kupplung miteinander verbindbar und mittels einer Kopplungsfeder gegeneinander vorgespannt sind, wobei das Ende der Drosselklappenwelle in Öffnungsrichtung zur Drosselklappe vom Stellantrieb über das eine Teil des Hebels mitnehmbar ist, wenn die Kupplung geschlossen ist, und wobei das Ende der Drosselklappenwelle bei offener Kupplung unter Spannung der Kopplungsfeder weiter in Schließrichtung der Drosselklappe bewegbar ist, wenn der Hebel schon am Anschlag anliegt.

Dabei wird zweckmäßigerweise eine elektromagnetische Kupplung verwendet, die von der elektronischen Regeleinrichtung zur Trennung bzw. Verbindung der beiden Teile des zweiten Hebels direkt ansteuerbar ist.

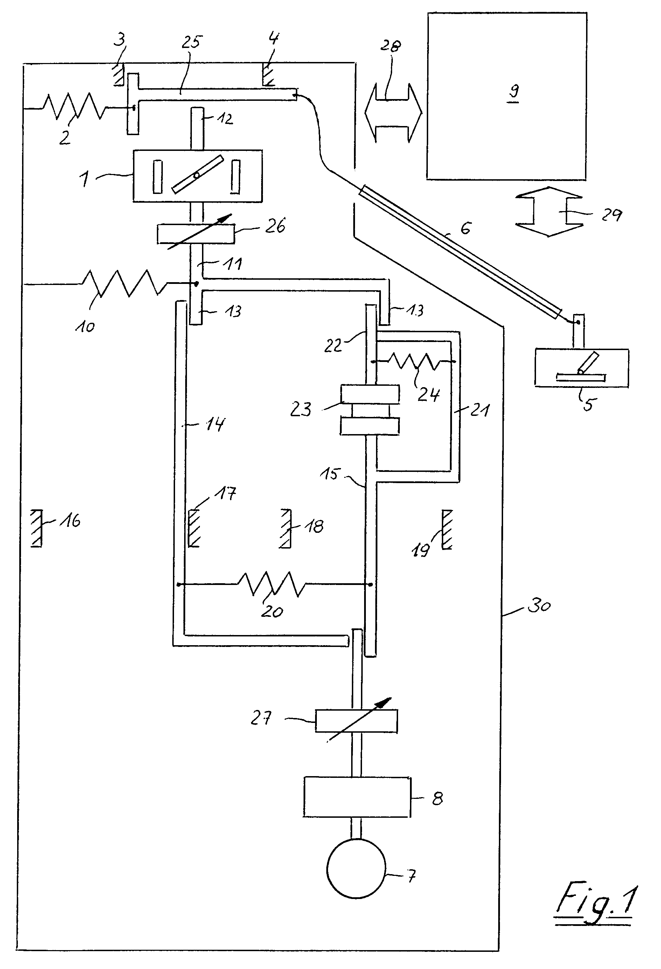

Weitere Einzelheiten werden anhand des in Fig. 1 dargestellten Schemas für ein Ausführungsbeispiel der erfindungsgemäßen Vorrichtung erläutert.

Die Drosselklappe 1 kann gegen die Kraft der Rückstellfeder 2 zwischen dem Leerlaufanschlag 3 und einem Vollastanschlag 4 mittels Gaspedal 5 und Seilzug 6 von einem Stellorgan 25 verstellt werden, indem das Stellorgan 25 mit einem ersten Ende 12 der Drosselklappenwelle 11 gekoppelt wird, wobei die jeweilige Ist-Position von einem Potentiometer 26 erfaßt und ein entsprechendes Signal an die elektronische Regeleinrichtung 9 gegeben wird. Der Doppelpfeil 28 steht für die Interaktion zwischen der Regeleinrichtung 9 und der Verstellvorrichtung 30, die mit allen innerhalb der Umrandung befindlichen Teilen eine Baueinheit bildet, während der Doppelpfeil 29 für die Interaktion zwischen der Regeleinrichtung 9 und den angeschlossenen Sensoren steht, die die verschiedenen Daten und Funktionen des Fahrzeugs erfassen, z.B. Geschwindigkeit, Stellung des Schaltgetriebes, Bremspedalkontakt, Motortemperatur.

Die Drosselklappenwelle 11 ist über eine zweite Rückstellfeder 10 in Schließrichtung der Drosselklappe 1 vorgespannt und kann an ihrem anderen Ende 13 mit zwei Hebeln 14, 15 gekoppelt werden, die ihrerseits von einem elektromotorischen Stellantrieb über ein Getriebe 8 verstellbar sind. Dabei wird die Ist-Stellung des Stellantriebs 7 von einem Potentiometer 27 erfaßt und an die Regeleinrichtung 9 gemeldet. Der erste Hebel 14 kann im Leerlaufbereich zwischen einem Anschlag 16 für kleinste Leerlaufleistung (LLₘᵢₙ) und einem Anschlag 17 für größte Leerlaufleistung (LLₘₐₓ) vom Stellantrieb 7 in Schließrichtung der Drosselklappe 1 mitgenommen werden. Der zweite Hebel 15 kann im Bereich zwischen einem Anschlag 18 für eine Leerlaufnotstellung (LLₙₒₜ) und einem Anschlag 19 für die Vollaststellung (VL) vom Stellantrieb in Öffnungsrichtung der Drosselklappe 1 verstellt werden. Die Hebel 14 und 15 sind mittels einer Kopplungsfeder 20 gegeneinander vorgespannt. Die Rückstellkraft dieser Kopplungsfeder 20 muß zusätzlich zur Kraft der Rückstellfeder 10 vom Stellantrieb 7 überwunden werden, wenn der Hebel 14 am Anschlag 17 anliegt und der Hebel 15 weiter in Öffnungsrichtung der Drosselklappe 1 verstellt werden soll. Die Kopplungsfeder 20 wird andererseits vom Stellantrieb 7 gespannt, wenn der Hebel 15 am Anschlag 18 anliegt und der Hebel 14 weiter in Schließrichtung der Drosselklappe 1 verstellt wird.

Der Hebel 15 weist zwei Teile 21 und 22 auf, die mittels einer Kopplungsfeder 24 gegeneinander verspannt sind. Die Teile 21, 22 sind bei geschlossener Kupplung 23 starr miteinander verbunden, so daß der Hebel 15 als einstückiges Bauteil wirkt und bei einer Drehung des Stellantriebs 7 in Öffnungsrichtung der Drosselklappe 1 das Ende 13 der Drosselklappenwelle 11 mitnehmen kann. Die Verstellung der Drosselklappenwelle 11 in Schließrichtung der Drosselklappe 1 erfolgt mittels der zweiten Rückstellfeder 10.

Bei offener Kupplung 23 sind die Teile 21 und 22 des Hebels 15 nur über die Kupplungsfeder 24 miteinander verbunden, die bei abgehobener Drosselklappe 1 (Hebel 13 liegt nicht am Teil 22 an) für eine definierte Lage der Teile 21, 22 zueinander sorgt und die schwächer ist als die Rückstellfeder 10, so daß das Ende 13 der Drosselklappenwelle 11 vom Teil 22 des Hebels 15 nicht mehr in Öffnungsrichtung verstellt werden kann.

Die Kupplung 23 wird von der Regeleinrichtung 9 automatisch geöffnet, wenn eine der oben beschriebenen Fehlfunktionen festgestellt wird. Die Kupplung 23 wird ohne Vorliegen einer Fehlfunktion auch geöffnet, wenn der Hebel 15 am Anschlag 18 anliegt und die Drosselklappe 1 weiter in Schließrichtung verstellt werden soll. Das Ende 13 der Drosselklappenwelle 11 kann bei entsprechender Stellung des Hebels 14 dann von der Rückstellfeder 10 in Schließrichtung verstellt werden, wobei gleichzeitig das abgekuppelte Teil 22 des Hebels 15 unter Spannung der Kopplungsfeder 24 mitgenommen wird.

Zum Schließen der Kupplung ist vorgesehen, daß zuvor der Antrieb durch die elektronische Regeleinrichtung in eine Position zwischen LLₙₒₜ und LLₘₐₓ gebracht wird.

Auf diese Weise ist eine Stellvorrichtung für eine Drosselklappe geschaffen, die zur Leerlaufregelung und zur Einhaltung einer konstanten Fahrgeschwindigkeit geeignet ist, und bei der im Falle einer Fehlfunktion die notwendige Abschaltung des Stellantriebs auf den Fahrbereich zwischen maximaler Leerlaufstellung (LLₘₐₓ) und Vollast (VL) beschränkt bleibt und die Leerlaufregelung durch den Stellantrieb in vollem Umfang möglich ist.

## Patentansprüche

1. Vorrichtung zum Verstellen einer im Ansaugstutzen einer Brennkraftmaschine drehbar gelagerten Drosselklappe (4), bestehend im wesentlichen aus
- einem gegen die Kraft einer erster Rückstellfeder (2) zwischen einem Leerlaufanschlag (3) und einem Vollastanschlag (4) mittels Gaspedal (5) und Gestänge oder Seilzug (6) verstellbaren und mit der Welle der Drosselklappe (1) koppelbaren Stellorgan (25),
- einem elektromotorischen Stellantrieb (7) mit Getriebe (8),
- einer elektronischen Regeleinrichtung (9) sowie
- einer gegen die Kraft einer zweiten Rückstellfeder (10) drehbaren Drosselklappenwelle (11) mit einem ersten Ende (12) für die Ankopplung an das Stellorgan (6) und einem zweiten Ende (13) für die Ankopplung an den Stellantrieb (7),
dadurch gekennzeichnet, daß der elektromotorische Stellantrieb (7) über das Getriebe (8) mit einem ersten Hebel (14) und einem zweiten Hebel (15) koppelbar ist, wobei
- der erste Hebel (14) im Leerlaufbereich zwischen Anschlägen für LLₘᵢₙ (16) und LLₘₐₓ (17) in Schließrichtung der Drosselklappe (1) vom Stellantrieb (7) mitnehmbar ist,
- der zweite Hebel (15) im Arbeitsbereich zwischen Anschlägen für LLₙₒₜ (18) und VL (19) in Öffnungsrichtung der Drosselklappe (1) vom Stellantrieb (7) mitnehmbar ist,
- zwischen beiden Hebeln (14, 15) eine Kopplungsfeder (20) angeordnet ist, durch die die beiden Hebel (14, 15) gegeneinander vorgespannt sind und wobei,
- der zweite Hebel (15) aus zwei Teilen (21, 22) besteht, die mittels einer Kupplung (23) miteinander verbindbar und mittels einer Kopplungsfeder (24) gegeneinander vorgespannt sind, wobei das Ende (13) der Drosselklappenwelle (11) in Öffnungsrichtung zur Drosselklappe (1) vom Stellantrieb (7) über das eine Teil (22) des Hebels (15) mitnehmbar ist, wenn die Kupplung (23) geschlossen ist, und wobei das Ende (13) der Drosselklappenwelle (11) bei offener Kupplung (23) unter Spannung der Kopplungsfeder (24) weiter in Schließrichtung der Drosselklappe (1) bewegbar ist, wenn der Hebel (15) schon am Anschlag (18) anliegt.

2. Vorrichtung nach Anspruch 1, dadurch gekennzeichnet, daß eine elektromagnetische Kupplung (23) verwendet wird, die von der elektronischen Regeleinrichtung (9) zur Trennung bzw. Verbindung der beiden Teile (21, 22) des zweiten Hebels (15) ansteuerbar ist.
